# EUROPEAN PATENT APPLICATION

(11) **EP 4 768 619 A1**
(43) Date of publication of application: **01.07.2026**
(21) Application number: 24881138.2
(22) Date of filing: 30.07.2024
(51) Int. Cl.: C22C 38/06, C21D 8/12

(54) **HIGH-GRADE NON-ORIENTED SILICON STEEL HAVING EXCELLENT SURFACE AND PREPARATION METHOD THEREFOR**

(30) Priority: 27.10.2023 CN 202311403107
(71) Applicant: Institute of Research of Iron and Steel, Jiangsu Province/Sha-Steel, Co. Ltd (CN), Suzhou, Jiangsu 215625 (CN); Zhangjiagang Yangtze River Cold Rolled Plate Co. Ltd, Suzhou, Jiangsu 215625 (CN); Jiangsu Shagang Group Co., Ltd., Suzhou, Jiangsu 215625 (CN)
(72) Inventor: YUE, Chongxiang, Suzhou, Jiangsu 215625 (CN); ZHU, Henan, Suzhou, Jiangsu 215625 (CN); QIAN, Hongwei, Suzhou, Jiangsu 215625 (CN); MA, Jianchao, Suzhou, Jiangsu 215625 (CN)
(74) Representative: Gille Hrabal Partnerschaftsgesellschaft mbB Patentanwälte
(86) International application number: PCT/CN2024/108514
(87) International publication number: WO 2025/086767

(57) **Abstract**

Disclosed in the present invention are non-oriented silicon steel and a preparation method therefor. The steel comprises the following chemical components in percentage by mass: C≤0.0025%, Si: 1.80-2.40%, Al: 0.40-0.60%, Mn: 1.5-2.0%, P≤0.02%, N≤0.003%, Al/N≥200, 0.058≤11×[Si]-14×[Mn]+21×[Al]+24×[P]≤0.078, and the balance being Fe and inclusions. The method comprises: 1) steelmaking, and preparing a continuously cast slab having a thickness of 220-240 mm; and 2) carrying out hot rolling, normalizing, acid pickling, cold rolling, finished product annealing, cooling, coating and finishing on the continuously cast slab to prepare a non-oriented silicon steel finished product, wherein in the finished product annealing process, the annealing temperature is 880-900°C and the temperature is maintained for 60-90s.

## Description

This application claims priority to Chinese Patent Application No. 202311403107.6, filed on October 27, 2023, entitled " HIGH-GRADE NON-ORIENTED SILICON STEEL HAVING EXCELLENT SURFACE AND PREPARATION METHOD THEREFOR ", the entire contents of which are incorporated herein by reference.

### TECHNICAL FIELD

The present application is in the field of steel material preparation technology, and relates to a high-grade non-oriented silicon steel with an excellent surface, and a preparation method for a high-grade non-oriented silicon steel that can improve a surface.

### BACKGROUND

Non-oriented silicon steel was mainly used for manufacturing a core component of a motor-a stator and rotor core. Compared with medium and low-grade non-oriented silicon steel, high-grade non-oriented silicon steel had a lower iron loss, a higher magnetic induction and a higher strength, and was a key material for a motor energy efficiency upgrading.

In a chemical composition of non-oriented silicon steel, Si and Al elements were the main elements affecting iron loss. Usually, as the contents of Si and Al increased, an iron loss value of non-oriented silicon steel decreased, that is, the chemical composition of high-grade non-oriented silicon steel was usually a high silicon and high aluminum steel. However, an increase in Si and Al contents caused an austenite-ferrite transformation temperature to rise (or no transformation), while a ferrite recrystallization temperature rose significantly. To achieve complete recrystallization during an annealing process, a finish annealing temperature of high-grade non-oriented silicon steel usually needed to reach above 950°C, or even above 1000°C. However, high-temperature annealing brought a series of problems: first, the high-temperature annealing caused furnace roll pickup; second, due to the furnace roll pickup, black dot defects and even scratches appeared on a surface of a high-grade non-oriented silicon steel product; third, production costs were high.

Among these, to avoid the furnace roll pickup, existing practices were mainly divided into the following three types.

First, improving a furnace roll material, for example, Chinese Patent Application No. 201520355268.7.

Second, changing an atmosphere of an annealing furnace, for example, Chinese Patent Applications No. 202010086938.5 and 201110160021.6.

Third, avoiding high-temperature annealing through a composition design; for example, Chinese Patent Application No. 200710042541.0, which used B as an alloying element and controlled a proportional relationship of B, C, and N. The method was verified to have a certain degree of reduction in an annealing temperature, but a magnetic property could only be guaranteed when the annealing temperature was above 970°C, and a production difficulty was high; another example was Chinese Patent Application No. 201110341815.2, which added as much as 0.6~0.8% of Sn, 0.3~0.6% of Cu, 0.008~0.015% of B, and 0.04~0.08% of Bi as alloying elements. Although adding the alloying elements could reduce the annealing temperature to solve a problem of furnace roll pickup, an alloy cost was greatly increased, and a steelmaking difficulty during production was also increased.

### SUMMARY

A purpose of the present application is to provide a non-oriented silicon steel and a preparation method for the non-oriented silicon steel.

To achieve the above inventive purpose, one embodiment of the present application provides a non-oriented silicon steel. A chemical composition of the non-oriented silicon steel in mass percentage is: C≤0.0025%, Si:1.80~2.40%, Al:0.40~0.60%, Mn:1.5~2.0%, P≤0.02%, N≤0.003%, Al/N≥200, 0.058≤11×[Si]-14×[Mn]+21×[Al]+24×[P]≤0.078, a balance being Fe and unavoidable inclusions; wherein, [Si], [Mn], [Al], and [P] are the mass percentages of Si, Mn, Al, and P, respectively.

As a further improvement of one embodiment, black dot defects with a diameter of 1.0~3.0mm on a surface of the non-oriented silicon steel are ≤10 pieces/km², and scratches with a width of 1.0~3.0mm and an aspect ratio of 3.0~10.0 on the surface of the non-oriented silicon steel are ≤2 places/km².

As a further improvement of one embodiment, impurity elements in the chemical composition of the non-oriented silicon steel in mass percentage are S≤0.0015%, Nb≤0.003%, V≤0.003%, Ti≤0.003%, Cr≤0.02%, Ni≤0.02%, and Cu≤0.02%.

As a further improvement of one embodiment, the non-oriented silicon steel has a thickness of 0.35~0.50mm, a yield strength ≥350MPa, and a tensile strength ≥450MPa.

As a further improvement of one embodiment, the non-oriented silicon steel has an iron loss P_{1.5/50}≤3.1W/kg, and a magnetic induction intensity B₅₀₀₀≥1.69T.

As a further improvement of one embodiment, the non-oriented silicon steel has an average grain size of 80~100µm.

Compared with the prior art, the beneficial effects of the present application are: without adding alloying elements such as Sn, Cu, B, and Bi as in the background art, and only by designing the contents of conventional elements Si, Al, and Mn, an austenite-ferrite transformation temperature (specifically 930~950°C) and a ferrite recrystallization temperature can be reduced, thereby achieving a low-temperature finish annealing (for example, no higher than 900°C) to solve a problem of furnace roll pickup in the prior art, while ensuring a magnetic property and taking into account a rolling feasibility. Thus, the non-oriented silicon steel achieves an excellent magnetic property, strength and surface quality overall, and achieves a low alloy cost, a low equipment loss, a low process cost and a low process difficulty in production.

To achieve the above inventive purpose, one embodiment of the present application provides a preparation method for a non-oriented silicon steel. The preparation method comprises:
1) steelmaking, and preparing a continuous casting slab with a thickness of 220~240mm; a chemical composition of the continuous casting slab in mass percentage is: C≤0.0025%, Si:1.80~2.40%, Al:0.40~0.60%, Mn:1.5~2.0%, P≤0.02%, N≤0.003%, Al/N≥200, 0.058≤11×[Si]-14×[Mn]+21×[Al]+24×[P]≤0.078, a balance being Fe and unavoidable inclusions; wherein, [Si], [Mn], [Al], and [P] are the mass percentages of Si, Mn, Al, and P, respectively;
2) subjecting the continuous casting slab to hot rolling process, normalizing process, pickling process, cold rolling process, finish annealing process, cooling process, coating process and finishing process, to prepare a non-oriented silicon steel product; wherein, in the finish annealing process, an annealing temperature is 880~900°C and holding at the annealing temperature for 60~90s.

As a further improvement of one embodiment, in steelmaking, Sn, Cu, B, and Bi are not added during alloying;
impurity elements in the chemical composition of the continuous casting slab in mass percentage are S≤0.0015%, Nb≤0.003%, V≤0.003%, Ti≤0.003%, Cr≤0.02%, Ni≤0.02%, and Cu≤0.02%.

As a further improvement of one embodiment, in the heating process, a heating temperature is 1100~1150°C and holding at the heating temperature for 150~200min;
in the hot rolling process, rough rolling is performed first to obtain an intermediate slab, then finish rolling is performed to obtain a hot-rolled coil, a rolling start temperature of the finish rolling is 950+20°C, a finish rolling delivery temperature is 830+20°C, a reduction ratio of the finish rolling is 94~95%, and a coiling temperature is 630+20°C;
in the normalizing process, a normalizing temperature is 850~900°C and holding at the normalizing temperature for 180~200s, an average grain size of a structure after normalizing is 80~100µm;
a thickness of an obtained non-oriented silicon steel product is 0.35~0.50mm, and an average grain size is 80~100µm.

As a further improvement of one embodiment, in the hot rolling process, the intermediate slab has a thickness of 35~45mm, the hot-rolled coil has a thickness of 2.0~2.5mm.

As a further improvement of one embodiment, in the hot rolling process, a laminar cooling is performed after the finish rolling, and an air cooling to a room temperature is performed after coiling, a structure of an obtained hot-rolled coil is a fibrous deformed structure;
in the normalizing process, a steel plate undergoes complete recrystallization.

As a further improvement of one embodiment, in a process of cold rolling, a steel plate after pickling is directly subjected to cold rolling without a preheating.

As a further improvement of one embodiment, in the finish annealing process, an annealing furnace adopts a protective atmosphere of N₂ and H₂, and a volume percentage of H₂ is 20~60%;
in the cooling process, a steel plate obtained after finish annealing is first subjected to a furnace cooling to 400~500°C, then air cooled to a room temperature.

As a further improvement of one embodiment, in the finish annealing process, an annealing furnace adopts a protective atmosphere of N₂ and H₂, and a volume percentage of H₂ is 20~30%.

Compared with the prior art, the beneficial effects of the present application are: combined with a composition design, by adopting a finish annealing temperature of 880~900°C, furnace roll pickup can be avoided, and sufficient recrystallization during finish annealing can be ensured to guarantee a magnetic property, while taking into account a rolling feasibility. Thus, the non-oriented silicon steel achieves an excellent magnetic property, strength and surface quality overall, and achieves a low alloy cost, a low equipment loss, a low process cost and a low process difficulty in production.

### DETAILED DESCRIPTION

To make the objectives, technical solutions and advantages of the present application clearer, the technical solutions of the present application will be described clearly and completely below in conjunction with specific embodiments of the present application. Obviously, the described embodiments are only part of the embodiments of the present application, not all of the embodiments. Based on the embodiments in the present application, all other embodiments obtained by those skilled in the art without making creative efforts fall within the protection scope of the present application.

One embodiment of the present application provides a high-grade non-oriented silicon steel with an excellent surface.

The chemical composition of the non-oriented silicon steel in mass percentage is: C≤0.0025%, Si:1.80~2.40%, Al:0.40~0.60%, Mn:1.5~2.0%, P≤0.02%, N≤0.003%, Al/N≥200, 0.058≤11×[Si]-14×[Mn]+21×[Al]+24×[P]≤0.078, a balance being Fe and unavoidable inclusions; wherein, [Si], [Mn], [Al], and [P] are the mass percentages of Si, Mn, Al, and P, respectively.

The functions of some chemical elements of the non-oriented silicon steel in this embodiment are introduced in detail below.

Si: is one of the effective elements for improving resistivity and reducing iron loss.

Al, N: Al is one of the effective elements for improving resistivity and reducing iron loss; and, Al easily forms AlN with N, and a coarse AlN is beneficial for a grain growth to reduce iron loss; while N is usually considered as a harmful element affecting a magnetic property, and in the present application, by controlling Al between 0.40~0.60% and Al/N≥200, a sufficient precipitation and growth of the AlN is facilitated, thereby improving the magnetic property.

Mn: Mn easily forms MnS with S, and a coarse MnS is beneficial for a grain growth to reduce iron loss.

Si, Al, Mn, P: In the present application, by controlling the respective contents of Si, Al, Mn, and P, and further controlling 0.058≤11×[Si]-14×[Mn]+21×[Al]+24×[P]≤0.078, an austenite-ferrite transformation temperature and a ferrite recrystallization temperature can be reduced, thereby achieving a low-temperature finish annealing, to solve a problem of furnace roll pickup in the prior art, thus ensuring a surface quality of the non-oriented silicon steel, and achieving a low alloy cost and a low production cost (including a process cost and an equipment cost), in addition, a magnetic property can be ensured under a condition of the low-temperature finish annealing, and a rolling feasibility can also be taken into account.

In summary, in the chemical composition design of the present application, without adding alloying elements such as Sn, Cu, B, and Bi as in the background art, and only by designing the contents of conventional elements Si, Al, Mn and P, the austenite-ferrite transformation temperature (specifically reduced to 930~950°C) and the ferrite recrystallization temperature can be reduced, thereby achieving the low-temperature finish annealing (for example, no higher than 900°C) to solve the problem of furnace roll pickup in the prior art, while ensuring the magnetic property and taking into account the rolling feasibility. Thus, the non-oriented silicon steel achieves an excellent magnetic property, strength and surface quality overall, and achieves the low alloy cost, a low equipment loss, the low process cost and a low process difficulty in production.

Further, impurity elements in the chemical composition of the non-oriented silicon steel in mass percentage are S≤0.0015%, Nb≤0.003%, V≤0.003%, Ti≤0.003%, Cr≤0.02%, Ni≤0.02%, and Cu≤0.02%.

In this embodiment, the non-oriented silicon steel has a thickness of 0.35~0.50mm, for example, the thickness is specifically 0.35mm, or specifically 0.50mm.

The non-oriented silicon steel has an excellent magnetic property, with an iron loss P_{1.5/50}≤3.1W/kg, and a magnetic induction intensity B₅₀₀₀≥1.69T. Specifically for example, the non-oriented silicon steel has the thickness of 0.35mm, the iron loss P_{1.5/50} of the non-oriented silicon steel is ≤2.8W/kg, and the magnetic induction intensity B₅₀₀₀ is ≥1.69T; and for another example, the non-oriented silicon steel has the thickness of 0.50mm, the iron loss P_{1.5/50} of the non-oriented silicon steel is ≤3.1W/kg, and the magnetic induction intensity B₅₀₀₀ is ≥1.70T.

In this embodiment, the non-oriented silicon steel has an average grain size of 80~100µm.

Moreover, in one embodiment, based on the low-temperature finish annealing (for example, no higher than 900°C), the problem of furnace roll pickup in the prior art can be solved, thereby improving the surface quality of the non-oriented silicon steel while ensuring the magnetic property, for example, the surface of the non-oriented silicon steel can be produced to have no more than 10 pieces of black dot defects per square kilometer with diameters of 1.0~3.0mm, and no more than 2 pieces of scratches per square kilometer with widths of 1.0~3.0mm and aspect ratios of 3.0~10.0. And as can be understood, if furnace roll pickup occurs, a size and a number of the black dot defects caused, as well as a length and a number of the scratches, would be far greater than this.

In addition, the non-oriented silicon steel has an excellent mechanical property, a yield strength ≥350MPa, and a tensile strength ≥450MPa.

Further, one embodiment of the present application also provides a preparation method for the non-oriented silicon steel. The preparation method is a preferred preparation method for the non-oriented silicon steel, and of course, the preparation method for the non-oriented silicon steel described above is not limited to this.

Specifically, the preparation method comprises:
1) steelmaking, and preparing a continuous casting slab with a thickness of 220~240mm; a chemical composition of the continuous casting slab in mass percentage is: C≤0.0025%, Si:1.80~2.40%, Al:0.40~0.60%, Mn:1.5~2.0%, P≤0.02%, N≤0.003%, Al/N≥200, 0.058≤11×[Si]-14×[Mn]+21×[Al]+24×[P]≤0.078, a balance being Fe and unavoidable inclusions; wherein, [Si], [Mn], [Al], and [P] are the mass percentages of Si, Mn, Al, and P, respectively;
2) subjecting the continuous casting slab to hot rolling process, normalizing process, pickling process, cold rolling process, finish annealing process, cooling process, coating process and finishing process, to prepare a non-oriented silicon steel product; wherein, in the finish annealing process, an annealing temperature is 880~900°C and holding at the annealing temperature for 60~90s.

Thus, in the chemical composition design of the present application, without adding alloying elements such as Sn, Cu, B, and Bi as in the background art, and only by designing the contents of conventional elements Si, Al, Mn and P, the austenite-ferrite transformation temperature and the ferrite recrystallization temperature can be reduced, thus combined with the finish annealing temperature of 880~900°C, furnace roll pickup can be avoided, and a sufficient recrystallization during the finish annealing can be ensured to guarantee the magnetic property, and the rolling feasibility can be taken into account, thus, the non-oriented silicon steel achieves the excellent magnetic property, strength and the surface quality overall, and in production, achieves the low alloy cost, the low equipment loss, the low process cost and the low process difficulty.

Further, during steelmaking, Sn, Cu, B, and Bi are not added during alloying, thereby reducing the austenite-ferrite transformation temperature and the ferrite recrystallization temperature, so as to facilitate guaranteeing the magnetic property under a condition of the low-temperature finish annealing, and the alloy cost is greatly reduced, and a steelmaking difficulty is also greatly reduced.

Impurity elements in the chemical composition of the continuous casting slab in mass percentage are S≤0.0015%, Nb≤0.003%, V≤0.003%, Ti≤0.003%, Cr≤0.02%, Ni≤0.02%, and Cu≤0.02%. That is, in the process of steelmaking, elements such as Nb, V, Ti, Cr, and Ni are not added during steelmaking.

Further, in the heating process, a heating temperature is 1100~1150°C and holding at the heating temperature for 150~200min;
in the hot rolling process, rough rolling is performed first to obtain an intermediate slab, then finish rolling is performed to obtain a hot-rolled coil, a rolling start temperature of the finish rolling is 950±20°C, a finish rolling delivery temperature is 830±20°C, a reduction ratio of the finish rolling is 94~95%, and a coiling temperature is 630±20°C;
in the normalizing process, a normalizing temperature is 850~900°C and holding at the normalizing temperature for 180~200s, and an average grain size of a structure after the normalizing process is 80~100µm;
a thickness of the obtained non-oriented silicon steel product is 0.35~0.50mm, and an average grain size is 80~100µm.

Thus, by adopting a low-temperature heating, a low-temperature rolling, a low-temperature coiling, and a low-temperature normalizing, the excellent magnetic property can be obtained, a production difficulty is low and a hot rolling stability is strong; in addition, an oxidation of a steel plate surface can be avoided, improving the surface quality and improving a yield rate.

Wherein, in the hot rolling process, a laminar cooling is performed after the finish rolling, and an air cooling to a room temperature is performed after coiling, a structure of the obtained hot-rolled coil is a fibrous deformed structure, thereby providing a deformation energy for a subsequent normalizing; in the normalizing process, a steel plate undergoes a complete recrystallization.

Further, in the cold rolling process, a steel plate after pickling is directly subjected to cold rolling without a preheating.

In the cold rolling process, a total reduction ratio is 81±2%. Thus, a synergy of a reduction ratio of the cold rolling and the reduction ratio of the finish rolling creates a condition for an annealing process stability, which is beneficial to stabilizing a process window of an annealing process and ensuring a stability of a finished product performance.

Specifically, in the hot rolling process, the intermediate slab has a thickness of 35~45mm, and the hot-rolled coil has a thickness of 2.0~2.5mm. For example, the intermediate slab has the thickness of 35mm, the hot-rolled coil has the thickness of 2.0mm, the obtained non-oriented silicon steel product has the thickness of 0.35mm, and the total reduction ratio of the cold rolling is 82.5%; and for another example, the intermediate slab has the thickness of 45mm, the hot-rolled coil has the thickness of 2.5mm, the obtained non-oriented silicon steel product has the thickness of 0.50mm, and the total reduction ratio of the cold rolling is 80.0%.

Preferably, in the finish annealing process, an annealing furnace adopts a protective atmosphere of N2 and H2, and a volume percentage of H₂ is 20~60%. More preferably, in the finish annealing process, the annealing furnace adopts the protective atmosphere of N2 and H2, and the volume percentage of H2 is 20~30%. Thus, the surface quality can be further improved, and the yield rate can be increased.

In the cooling process, the steel plate obtained after finish annealing is first subjected to a furnace cooling to 400~500°C, then air cooled to the room temperature.

In addition, the normalizing process and the finish annealing process both adopt a constant speed production.

Further, in a preferred embodiment, in the pickling process, a hydrochloric acid pickling is adopted, an acid solution temperature is 80~85°C, a concentration of hydrochloric acid in an acid solution is 140~160g/L, and a mass concentration of Fe²⁺ is ≤80g/L.

In summary, the preparation method of the present application has the following beneficial effects: (1) combined with the composition design, by adopting the finish annealing temperature of 880~900°C, the furnace roll pickup can be avoided, and the sufficient recrystallization during the finish annealing can be ensured to guarantee the magnetic property, while taking into account the rolling feasibility. Thus, the non-oriented silicon steel achieves the excellent magnetic property, strength and the surface quality overall, and in production, achieves the low alloy cost, the low equipment loss, the low process cost and the low process difficulty; (2) the production difficulty is low and the hot rolling stability is strong; in addition, the oxidation of the steel plate surface can be avoided, improving the surface quality and improving the yield rate; (3) a rollability is strong, for example, the low-temperature rolling and the low-temperature normalizing can be adopted, and both the normalizing and the finish annealing can achieve the constant speed production, and the cold rolling can be implemented using a single stand or a tandem mill, a rolling feasibility is high, improving a production efficiency while ensuring a comprehensive performance (including a mechanical property, the magnetic property and the surface quality).

The detailed descriptions listed above are merely specific descriptions of feasible embodiments of the present application, and are not intended to limit the protection scope of the present application. Any equivalent embodiments or modifications made without departing from the technical spirit of the present application should be included within the protection scope of the present application.

The specific embodiments of the present application are introduced below through 6 examples and 6 comparative examples. The chemical compositions of the examples and the comparative examples are shown in Table 1.

**Table 1: Chemical compositions of examples and comparative examples**

| | chemical composition in mass percentage/% | | | | | | | | | | | | | | Special Requirement | |
|---|---|---|---|---|---|---|---|---|---|---|---|---|---|---|---|---|
| | C | S | N | Si | Al | Mn | P | Nb | V | Ti | Cr | Ni | Cu | B | Al /N | X |
| example 1 | 0.0 01 5 | 0.0 00 8 | 0.0 01 3 | 1. 8 3 | 0. 4 2 | 1. 5 5 | 0. 01 2 | 0.0 00 8 | 0.0 00 5 | 0.0 00 8 | 0. 01 2 | 0. 01 5 | 0. 01 0 | 0. 00 6 | 32 3 | 0.0 75 4 |
| exam ple 2 | 0.0 01 5 | 0.0 00 8 | 0.0 01 3 | 1. 8 3 | 0. 4 2 | 1. 5 5 | 0. 01 2 | 0.0 00 8 | 0.0 00 5 | 0.0 00 8 | 0. 01 2 | 0. 01 5 | 0. 01 0 | 0. 00 6 | 32 3 | 0.0 75 4 |
| exam ple 3 | 0.0 01 2 | 0.0 00 9 | 0.0 02 3 | 2. 0 2 | 0. 4 8 | 1. 8 2 | 0. 00 9 | 0.0 01 3 | 0.0 01 2 | 0.0 01 1 | 0. 01 3 | 0. 01 5 | 0. 01 3 | 0. 00 3 | 20 9 | 0.0 70 4 |
| exam ple 4 | 0.0 01 2 | 0.0 00 9 | 0.0 02 3 | 2. 0 2 | 0. 4 8 | 1. 8 2 | 0. 00 9 | 0.0 01 3 | 0.0 01 2 | 0.0 01 1 | 0. 01 3 | 0. 01 5 | 0. 01 3 | 0. 00 3 | 20 9 | 0.0 70 4 |
| example 5 | 0.0 01 6 | 0.0 01 1 | 0.0 01 8 | 2. 2 3 | 0. 4 7 | 1. 9 8 | 0. 00 8 | 0.0 00 6 | 0.0 01 0 | 0.0 00 9 | 0. 01 0 | 0. 01 0 | 0. 01 4 | 0. 00 4 | 26 1 | 0.0 68 7 |
| example 6 | 0.0 01 6 | 0.0 01 1 | 0.0 01 8 | 2. 2 3 | 0. 4 7 | 1. 9 8 | 0. 00 8 | 0.0 00 6 | 0.0 01 0 | 0.0 00 9 | 0. 01 0 | 0. 01 0 | 0. 01 4 | 0. 00 4 | 26 1 | 0.0 68 7 |
| comparative example 1 | 0.0 01 3 | 0.0 01 6 | 0.0 02 0 | 2. 0 1 | 0. 4 6 | 1. 6 3 | 0. 00 1 | 0.0 01 1 | 0.0 01 0 | 0.0 00 8 | 0. 01 8 | 0. 00 9 | 0. 02 1 | 0. 00 5 | 23 0 | 0.0 89 7 |
| comparative example 2 | 0.0 02 6 | 0.0 07 | 0.0 01 0 | 1. 6 3 | 0. 3 5 | 1. 3 2 | 0. 01 4 | 0.0 00 9 | 0.0 01 2 | 0.0 01 3 | 0. 02 3 | 0. 01 2 | 0. 01 5 | 0. 00 3 | 35 0 | 0.0 71 4 |
| comparative exam ple 3 | 0.0 01 4 | 0.0 01 2 | 0.0 01 4 | 2. 5 5 | 0. 6 8 | 2. 5 1 | 0. 01 2 | 0.0 00 8 | 0.0 00 8 | 0.0 01 4 | 0. 01 4 | 0. 00 6 | 0. 01 4 | 0. 00 6 | 48 6 | 0.0 74 8 |
| comp arativ e exam ple 4 | 0.0 01 8 | 0.0 01 2 | 0.0 01 5 | 2. 5 3 | 0. 6 5 | 0. 5 2 | 0. 01 3 | 0.0 00 6 | 0.0 00 9 | 0.0 01 2 | 0. 01 5 | 0. 01 3 | 0. 01 2 | 0. 00 5 | 43 3 | 0.3 45 1 |
| comp arativ e exam ple 5 | 0.0 02 2 | 0.0 01 2 | 0.0 01 1 | 2. 8 6 | 0. 6 8 | 0. 5 5 | 0. 01 2 | 0.0 01 0 | 0.0 01 2 | 0.0 01 5 | 0. 01 5 | 0. 01 0 | 0. 01 6 | 0. 00 1 | 61 8 | 0.3 83 3 |
| comparative example 6 | 0.0 01 5 | 0.0 00 8 | 0.0 01 4 | 3. 2 8 | 0. 7 4 | 0. 4 9 | 0. 01 5 | 0.0 00 8 | 0.0 00 5 | 0.0 01 3 | 0. 01 2 | 0. 01 6 | 0. 01 0 | 0. 00 3 | 52 9 | 0.4 51 2 |

| | | | | | | | | | | | | | | | | |
|---|---|---|---|---|---|---|---|---|---|---|---|---|---|---|---|---|
| Note: X=11×[Si]-14×[Mn]+21×[Al]+24×[P] | | | | | | | | | | | | | | | | |

A metallographic structure, the magnetic property, the mechanical property and the surface quality detection were performed on each example and comparative example, including: measuring the average grain size after normalizing and an average grain size of a finished product according to GB/T 6394 standard; detecting the iron loss and the magnetic induction intensity according to GB/T 3655 standard; detecting the tensile strength and the yield strength according to GB/T3076 standard; measuring the surface quality using a Cognex surface quality online monitoring system method, and the results are shown in Table 2.

As can be seen, the average grain size of the structure after normalizing for each example of the high-grade non-oriented silicon steel is 80~100µm, and that of the finished product after annealing is 80~100µm; meanwhile, each example exhibits magnetic, mechanical and surface properties. The iron loss P_{1.5/50} is ≤3.1W/kg, the magnetic induction intensity B₅₀₀₀ is ≥1.69T, the yield strength is ≥350MPa, the tensile strength is ≥450MPa, the surface quality of non-oriented silicon steel is such that there are no more than 10 pieces of black dot defects per square kilometer with diameters of 1.0~3.0mm and no more than 2 pieces of scratches per square kilometer with widths of 1.0~3.0mm and aspect ratios of 3.0~10.0. Further, because Examples 2, 4 and 6 have a thin finished product thickness of 0.35mm, the iron losses of Examples 2, 4 and 6 are lower, being 2.74 W/kg, 2.61 W/kg and 2.54W/kg respectively. The present application achieves a high-quality control of the magnetic property, the mechanical property and the surface quality of the high-grade non-oriented silicon steel through an overall combined design of the chemical composition, a hot rolling process, a normalizing process, a cold rolling process and an annealing process.

**Table 2: Grain size, magnetic properties, mechanical properties and surface quality of examples and comparative examples**

| | finished product thickness, mm | average grain size after normalizing, µm | average grain size of finished product, µm | P_{1.5/} *50,* W/k g | B₅₀₀₀, T | yield strength, MPa | tensile strength, MPa | Number of Black Spot Defects, pcs/km² | Number of Scratches, pcs/km² |
|---|---|---|---|---|---|---|---|---|---|
| example 1 | 0.50 | 85 | 84 | 3.05 | 1.717 | 358 | 456 | 0.1 | 0 |
| example 2 | 0.35 | 92 | 87 | 2.74 | 1.708 | 362 | 458 | 0.5 | 0 |
| example 3 | 0.50 | 95 | 94 | 2.91 | 1.715 | 380 | 468 | 1.3 | 0 |
| example 4 | 0.35 | 92 | 90 | 2.61 | 1.703 | 385 | 472 | 2.4 | 0 |
| example 5 | 0.50 | 88 | 92 | 2.78 | 1.710 | 398 | 482 | 0.5 | 0 |
| example 6 | 0.35 | 85 | 96 | 2.54 | 1.695 | 392 | 488 | 3.2 | 0 |
| comparative example 1 | 0.50 | 75 | 68 | 3.41 | 1.685 | 386 | 475 | 2.6 | 0 |
| compara tive example 2 | 0.50 | 89 | 93 | 3.3 2 | 1.7 15 | 334 | 438 | 1.4 | 0 |
| comparative example 3 | Fracture occurred during the cold rolling process, resulting in failure to obtain the finished product | | | | | | | | |
| comparative example 4 | 0.35 | 96 | 95 | 2.7 6 | 1.7 05 | 364 | 455 | 25 | 5 |
| comparative example 5 | 0.35 | 90 | 92 | 2.6 3 | 1.7 03 | 378 | 469 | 39 | 10 |
| comparative example 6 | 0.35 | 93 | 98 | 2.5 6 | 1.6 94 | 395 | 481 | 83 | 17 |

Above, the non-oriented silicon steel of each example was produced by the preparation method described above, wherein Examples 1 and 2 adopted a same steelmaking composition, as were Examples 3 and 4, and Examples 5 and 6; Examples 1, 3 and 5 each have a finished product thickness of 0.50mm, with a corresponding hot rolling intermediate slab thickness of 45mm, and a hot-rolled coil thickness of 2.5mm; Examples 2, 4 and 6 each have a finished product thickness of 0.35mm, with a corresponding hot rolling intermediate slab thickness of 35mm, and a hot-rolled coil thickness of 2.0mm. Specifically as follows:
(1) steelmaking and preparing the continuous casting slab, Examples 1~6 did not add Sn, Cu, B, and Bi when alloying a molten steel during steelmaking;
(2) the continuous casting slab was fed into a heating furnace for heating, the heating temperature was 1100~1150°C and holding at the heating temperature for 150~200min; then, the rough rolling was performed first to obtain the intermediate slab, then the finish rolling was performed to obtain the hot-rolled coil, the rolling start temperature of the finish rolling was 950±20°C, the finish rolling delivery temperature was 830±20°C, the reduction ratio of the finish rolling was 94~95%, the laminar cooling was performed after the finish rolling, the coiling temperature was 630±20°C, and the air cooling to the room temperature was performed after coiling; a sampling and testing were performed on the obtained hot-rolled coil cooled to the room temperature, and the steel plate structure of each example was the fibrous deformed structure;
(3) the obtained hot-rolled coil was fed into a normalizing furnace for a normalizing treatment, the normalizing temperature was 850~900°C and holding at the normalizing temperature for 180~200s; after the normalizing, a sampling and testing were performed on the normalized steel plate, and the average grain size of the steel plate structure of each example was 80~100µm;
(4) then, the steel plate was pickled, and then the cold rolling was performed directly without the preheating, with the total reduction ratio of 81±2%, to obtain a cold-rolled coil;
(5) the obtained cold-rolled coil was subjected to the finish annealing in the annealing furnace, the annealing temperature was 880~900°C and holding at the annealing temperature for 60~90s, the annealing furnace adopted the protective atmosphere of N2 and H2, and the volume percentage of H2 was 20~60%; the steel plate obtained after finish annealing was first subjected to the furnace cooling to 400~500°C, then air cooled to the room temperature;
(6) finally, the steel plate was subjected to the coating and the finishing to prepare the non-oriented silicon steel product.

Above, some key parameters of each example of the non-oriented silicon steel during the preparation process are shown in Table 3.

**Table 3: Some key parameters of examples and comparative examples during preparation process**

| | Con tinu ous casti ng slab thic knes s, mm | Heati ng temp eratu re × holdi ng time, °C× min | Tra nsf er bar thic kne ss, mm | Hot roll ed coil thic kne ss, mm | fini sh roll ing red ucti on rati o, % | rolli ng start tem pera ture of the finis h rolli ng, °C | finish rollin g delive ry tempe rature , °C | Coilin g tempe rature , °C | Nor mali zing temp eratu re × hold ing time, °C×s | Fini shed anne alin g tem pera ture × hold ing time , °C ×s | Ann eali ng H₂ volu me frac tion, % |
|---|---|---|---|---|---|---|---|---|---|---|---|
| example 1 | 223 | 1120 ×182 | 45 | 2.5 | 94. 4 | 965 | 834 | 628 | 892 ×18 9 | 884 ×78 | 25 |
| example 2 | 223 | 1118 ×181 | 35 | 2.0 | 94. 3 | 958 | 838 | 634 | 886 ×18 9 | 888 ×78 | 25 |
| exa mple 3 | 223 | 1115 | 45 | 2.5 | 94. 4 | 955 | 842 | 643 | 874 ×18 8 | 886 ×78 | 25 |
| example 4 | 223 | 1124 ×181 | 35 | 2.0 | 94. 3 | 962 | 846 | 621 | 872 ×188 | 892 ×78 | 25 |
| example 5 | 223 | 1128 ×182 | 45 | 2.5 | 94. 4 | 945 | 825 | 615 | 865 ×192 | 898 ×78 | 25 |
| example 6 | 223 | 1119 ×182 | 35 | 2.0 | 94. 3 | 939 | 823 | 626 | 858 ×192 | 883 ×78 | 25 |
| comparative example 1 | 223 | 1123 ×181 | 45 | 2.5 | 94. 4 | 961 | 836 | 638 | 882 ×189 | 885 ×78 | 25 |
| comparative example 2 | 223 | 1117 ×182 | 45 | 2.5 | 94. 4 | 958 | 844 | 633 | 884 ×188 | 886 ×78 | 25 |
| com parat ive exa mple 3 | 223 | 1125 ×181 | 45 | 2.5 | 94. 4 | 948 | 823 | 625 | 875 ×19 0 | Strip breakage occurred during the cold rolling process, and annealing was not performed | |
| com parat ive exa mple 4 | 223 | 1121 ×181 | 35 | 2.0 | 94. 3 | 978 | 858 | 664 | 976 ×18 9 | 982 ×78 | 25 |
| com parat ive exa mple 5 | 223 | 1128 ×181 | 35 | 2.0 | 94. 3 | 982 | 866 | 661 | 952 ×18 9 | 995 ×78 | 25 |
| com parat ive exa mple 6 | 223 | 1115 ×182 | 35 | 2.0 | 94. 3 | 979 | 873 | 656 | 938 ×19 0 | 100 5×7 8 | 25 |

The present application provides a high-grade non-oriented silicon steel, and a preparation method for a high-grade non-oriented silicon steel. Specifically, the present application provides a set of overall combined design schemes from the chemical composition, the hot rolling process, the normalizing process, the cold rolling process and the annealing process for preparing the high-grade non-oriented silicon steel described in the present application, wherein the numerous parameters involved are a correlated whole.

Comparative Examples 1, 2 and 3 adopted the same hot rolling process, normalizing process, cold rolling process and annealing process as Examples 1~6 (see Table 3), but with different chemical composition.

A steelmaking composition of Comparative Example 1 had C:0.0013%, Si:2.01%, Al:0.46%, Mn:1.63%, and P:0.001%, which satisfied the requirements of C≤0.0025%, Si:1.80~2.40%, Al:0.40~0.60%, Mn:1.5~2.0%, and P≤0.02%, but the 11×[Si]-14×[Mn]+21×[Al]+24×[P] of Comparative Example 1 was 0.0897, which did not satisfy the requirement of 0.058≤11×[Si]-14×[Mn]+21×[Al]+24×[P]≤0.078, that is, a combination of Si, Al, Mn and P in Comparative Example 1 was unreasonable. As a result, the austenite-ferrite transformation temperature of the non-oriented silicon steel of Comparative Example 1 was high, specifically 962°C. Under the condition, normalizing and annealing processes similar to Examples 1~6 were adopted for a subsequent production, specifically a normalizing temperature of 882°C, a normalizing holding time of 189s, an annealing temperature of 885°C, and an annealing holding time of 78s. Although surface problems caused by the furnace roll pickup were avoided because the annealing temperature was lower than 900°C; but because the normalizing temperature and the annealing temperature were much lower than the austenite-ferrite transformation temperature of the non-oriented silicon steel of Comparative Example 1, ferrite grains were fine after normalizing and annealing, an average grain size after normalizing was 75µm, and an average grain size of the finished product after annealing was 68µm, which were significantly finer than Examples 1~6. The fine grains led to a poor magnetic property of the finished product, the iron loss P_{1.5/50} of Comparative Example 1 was 3.41W/kg, and the magnetic induction intensity B₅₀₀₀ was 1.685T.

A steelmaking composition of Comparative Example 2 had C:0.0026%, Si:1.63%, Al:0.35%, Mn:1.32%, and P:0.014%, which satisfied the requirement of 0.058≤11×[Si]-14×[Mn]+21×[Al]+24×[P]≤0.078. Obviously, the austenite-ferrite transformation temperature of the non-oriented silicon steel of Comparative Example 2 was similar to Examples 1~6, and lower than Comparative Example 1, specifically 943°C. Under the condition, normalizing and annealing processes similar to Examples 1~6 were adopted for a subsequent production, specifically a normalizing temperature of 884°C, a normalizing holding time of 188s, an annealing temperature of 886°C, and an annealing holding time of 78s. Because the annealing temperature was lower than 900°C, surface problems caused by the furnace roll pickup were avoided; meanwhile, because the normalizing temperature and the annealing temperature were reasonably controlled, ferrite grains grew normally after normalizing and annealing, an average grain size after normalizing was 89µm, and an average grain size of the finished product after annealing was 93µm, which were close to Examples 1~6. However, the steelmaking composition of Comparative Example 2 with C:0.0026%, Si:1.63%, Al:0.35%, and Mn:1.32% did not satisfy the requirements of C≤0.0025%, Si:1.80~2.40%, Al:0.40~0.60%, and Mn:1.5~2.0%. Particularly, Si and Al, which are the most effective elements for improving resistivity and reducing iron loss, were both lower than Examples 1~6, leading to a poor magnetic property of Comparative Example 2, and the iron loss P_{1.5/50} of Comparative Example 2 was 3.32W/kg.

To reduce iron loss, Comparative Example 3 attempted to avoid the problems encountered by Comparative Examples 1 and 2 by increasing the contents of Si and Al, with a steelmaking composition of C:0.00 14%, Si:2.55%, Al:0.68%, and P:0.0 12%, and meanwhile, to satisfy the requirement of 0.058≤11×[Si]-14×[Mn]+21 ×[Al]+24×[P]≤0.078, Mn:2.51%, specifically 11×[Si]-14×[Mn]+21×[Al]+24×[P]=0.0748. Obviously, the austenite-ferrite transformation temperature of the non-oriented silicon steel of Comparative Example 3 was similar to Examples 1~6, and lower than Comparative Example 1, specifically 947°C. Under the condition, normalizing and annealing processes similar to Examples 1~6 could be adopted for a subsequent production; but due to a Si+Al+Mn content as high as 5.7% in Comparative Example 3, a hot-rolled steel coil had a high strength and a poor toughness, a strip breakage occurred during an actual cold rolling, and a subsequent production could not be completed.

Comparative Examples 4~6 adopted a conventional high-grade non-oriented silicon steel high-temperature normalizing-high-temperature annealing process, with specific steelmaking compositions shown in Table 1; the austenite-ferrite transformation temperatures of Comparative Examples 4, 5 and 6 were all higher than 1000°C. Taking Comparative Example 1 as a reference, if Comparative Examples 4~6 adopted normalizing and annealing processes similar to Examples 1~6, the ferrite grains of Comparative Examples 4~6 obviously could not grow, affecting iron loss. Therefore, Comparative Examples 4~6 subsequently adopted a high-temperature normalizing and a high-temperature annealing process, specifically for Comparative Example 4: a normalizing temperature of 976°C, a normalizing holding time of 189s, an annealing temperature of 982°C, and an annealing holding time of 78s; for Comparative Example 5: a normalizing temperature of 952°C, a normalizing holding time of 189s, an annealing temperature of 995°C, and an annealing holding time of 78s; for Comparative Example 6: a normalizing temperature of 938°C, a normalizing holding time of 188s, an annealing temperature of 1005°C, and an annealing holding time of 78s. The high-temperature normalizing, particularly the high-temperature annealing process, achieved a normal growth of ferrite grains after normalizing and annealing for the non-oriented silicon steel of Comparative Examples 4~6, with average grain sizes after normalizing of 96, 90 and 93µm respectively, and average grain sizes of finished products after annealing of 95, 92 and 98µm respectively, which were close to Examples 1~6. Because a finished product thickness of Comparative Examples 4~6 was 0.35mm, the magnetic property of Comparative Examples 4~6 was better than Examples 1, 3 and 5 with a finished product thickness of 0.50mm, and close to Examples 2, 4 and 6 with a finished product thickness of 0.35mm. But due to Comparative Examples 4~6 adopting the conventional high-grade non-oriented silicon steel high-temperature normalizing-high-temperature annealing process, with an annealing temperature of 980°C, particularly the annealing temperature of Comparative Example 6 higher than 1000°C, furnace roll pickup problems were caused.

Due to the high-temperature annealing, the furnace roll pickup problems were caused, so the surface quality of the finished products of Comparative Examples 4~6 was poor, the numbers of black dot defects with a diameter of 1.0~3.0mm on the surfaces of Comparative Examples 4~6 were 25, 39 and 83 pieces/km² respectively, significantly higher than Examples 1~6 (specifically ≤5 pieces/km²); the numbers of scratches with a surface width of 1.0~3.0mm and an aspect ratio of 3.0~10.0 for Comparative Examples 4~6 were 5, 10 and 17 pieces/km² respectively, significantly higher than Examples 1~6 (specifically no scratches).

## Claims

1. A non-oriented silicon steel, wherein a chemical composition of the non-oriented silicon steel in mass percentage is: C≤0.0025%, Si:1.80~2.40%, Al:0.40~0.60%, Mn:1.5~2.0%, P≤0.02%, N≤0.003%, Al/N≥200, 0.058≤11×[Si]-14×[Mn]+21×[Al]+24×[P]≤0.078, a balance being Fe and unavoidable inclusions; wherein, [Si], [Mn], [Al], and [P] are the mass percentages of Si, Mn, Al, and P, respectively.

2. The non-oriented silicon steel according to claim 1, wherein black dot defects with a diameter of 1.0~3.0mm on a surface of the non-oriented silicon steel are ≤10 pieces/km², and scratches with a width of 1.0~3.0mm and an aspect ratio of 3.0~10.0 on the surface of the non-oriented silicon steel are ≤2 places/km².

3. The non-oriented silicon steel according to claim 1, wherein impurity elements in the chemical composition of the non-oriented silicon steel in mass percentage are S≤0.0015%, Nb≤0.003%, V≤0.003%, Ti≤0.003%, Cr≤0.02%, Ni≤0.02%, and Cu≤0.02%.

4. The non-oriented silicon steel according to claim 1, wherein the non-oriented silicon steel has a thickness of 0.35~0.50mm, a yield strength ≥350MPa, and a tensile strength ≥450MPa.

5. The non-oriented silicon steel according to claim 1, wherein the non-oriented silicon steel has an iron loss P_{1.5/50}≤3.1W/kg, and a magnetic induction intensity B₅₀₀₀≥1.69T.

6. The non-oriented silicon steel according to claim 1, wherein the non-oriented silicon steel has an average grain size of 80~100µm.

7. A preparation method for a non-oriented silicon steel, wherein the preparation method comprises:
1) steelmaking, and preparing a continuous casting slab with a thickness of 220~240mm; a chemical composition of the continuous casting slab in mass percentage is: C≤0.0025%, Si:1.80~2.40%, Al:0.40~0.60%, Mn:1.5~2.0%, P≤0.02%, N≤0.003%, Al/N≥200, 0.058≤11×[Si]-14×[Mn]+21×[Al]+24×[P]≤0.078, a balance being Fe and unavoidable inclusions; wherein, [Si], [Mn], [Al], and [P] are the mass percentages of Si, Mn, Al, and P, respectively;
2) subjecting the continuous casting slab to hot rolling process, normalizing process, pickling process, cold rolling process, finish annealing process, cooling process, coating process and finishing process, to prepare a non-oriented silicon steel product; wherein, in the finish annealing process, an annealing temperature is 880~900°C and holding at the annealing temperature for 60~90s.

8. The preparation method for a non-oriented silicon steel according to claim 7, wherein in steelmaking, Sn, Cu, B, and Bi are not added during alloying;
impurity elements in the chemical composition of the continuous casting slab in mass percentage are S≤0.0015%, Nb≤0.003%, V≤0.003%, Ti≤0.003%, Cr≤0.02%, Ni≤0.02%, and Cu≤0.02%.

9. The preparation method for a non-oriented silicon steel according to claim 7, wherein in the heating process, a heating temperature is 1100~1150°C and holding at the heating temperature for 150~200min;
in the hot rolling process, rough rolling is performed first to obtain an intermediate slab, then finish rolling is performed to obtain a hot-rolled coil, a rolling start temperature of the finish rolling is 950±20°C, a finish rolling delivery temperature is 830±20°C, a reduction ratio of the finish rolling is 94~95%, and a coiling temperature is 630±20°C;
in the normalizing process, a normalizing temperature is 850~900°C and holding at the normalizing temperature for 180~200s.

10. The preparation method for a non-oriented silicon steel according to claim 9, wherein in the hot rolling process, the intermediate slab has a thickness of 35~45mm, the hot-rolled coil has a thickness of 2.0~2.5mm, and the obtained non-oriented silicon steel product has a thickness of 0.35~0.50mm.

11. The preparation method for a non-oriented silicon steel according to claim 9, wherein in the hot rolling process, a laminar cooling is performed after the finish rolling, and an air cooling to a room temperature is performed after coiling.

12. The preparation method for a non-oriented silicon steel according to claim 9, wherein in a process of cold rolling, a steel plate after pickling is directly subjected to cold rolling without a preheating.

13. The preparation method for a non-oriented silicon steel according to claim 7, wherein in the finish annealing process, an annealing furnace adopts a protective atmosphere of N₂ and H₂, and a volume percentage of H₂ is 20~60%;
in the cooling process, a steel plate obtained after finish annealing is first subjected to a furnace cooling to 400~500°C, then air cooled to a room temperature.

14. The preparation method for a non-oriented silicon steel according to claim 7, wherein in the finish annealing process, an annealing furnace adopts a protective atmosphere of N₂ and H₂, and a volume percentage of H₂ is 20~30%.
